# EUROPEAN PATENT SPECIFICATION

(11) **EP 3 430 899 B1**
(45) Date of publication and mention of the grant of the patent: **01.09.2021**
(21) Application number: 16894667.1
(22) Date of filing: 08.09.2016
(51) Int. Cl.: F21V 7/22, F21S 2/00, H05B 33/08

(54) **INSECT TRAP**
INSEKTENFALLE
PIÈGE À INSECTES

(30) Priority: 14.03.2016 KR 20160030419; 27.04.2016 KR 20160051693
(43) Date of publication of application: 23.01.2019
(73) Proprietor: Seoul Viosys Co., Ltd., 15429 Ansan-si (KR)
(72) Inventor: EOM, Hoon Sik, Ansan-si Gyeonggi-do 15429 (KR)
(74) Representative: Isarpatent
(86) International application number: PCT/KR2016/010109
(87) International publication number: WO 2017/159937

(56) References cited:
- WO-A1-2014/199388
- WO-A1-2015/043179
- KR-A- 20110 005 038
- KR-A- 20120 078 220
- KR-A- 20150 112 755
- KR-A- 20150 124 766
- KR-A- 20150 125 271
- KR-Y1- 200 393 447
- KR-Y1- 200 425 859

## Description

### [Technical Field]

Embodiments of the present disclosure relate to an insect trap, and more particularly, to an insect trap that collects insects enticed by decoy light by suctioning the insects using an air stream generated by a suction fan.

### [Background Art]

Recently, harmful insects have increased in number due to change of climate conditions such as global warming and social policies such as eco-friendly policies. Harmful insects provide not only damage to crops and livestock, but also have a negative influence on people by transmitting pathogenic bacteria such as malaria, dengue, Japanese encephalitis, and the like. Particularly, studies on a mosquito insecticide method have been actively carried out due to spread of infection fear of zika virus (ZIKV).

Conventional insecticidal methods include a chemical pest control method using an insecticide, a biological pest control method using mudfish and the like, a physical pest control method using a backlight trap and carbon dioxide that entices the harmful insects to kill harmful insects through application of high voltage, and an environmental pest control method such as removal of puddles or removal of environments favorable to insect larvae. However, the chemical pest control method can cause secondary contamination, the biological pest control method or the environmental pest control method is expensive, time consuming and labor intensive, and the physical pest control method using an insecticide or insect trap has a problem of user inconvenience due to a complicated configuration of the trap or provides danger due to use of a high voltage device.

On the other hand, a UV light source is used for various purposes such as medical purposes including sterilization and disinfection, analysis purposes based on variation in intensity upon irradiation of UV light, industrial purposes such as UV curing, beauty treatment such as UV tanning, insect collection, identification of counterfeit notes, and the like. Examples of typical UV lamps used as the UV light source include a mercury lamp, an excimer lamp, a deuterium lamp, and the like. However, such typical lamps have problems of high power consumption and heat generation, short lifespan, and environmental pollution due to toxic gas supplied to the lamps.

In order to address the problems of the aforementioned typical UV light sources, a UV light emitting device (LED) has been spotlighted due to various merits including low power consumption and no environmental pollution. Accordingly, some studies are focused on development of an insect trap configured to collect insects using a suction fan after enticing the insects using decoy light.

However, such an insect trap configured to collect insects using the suction fan after enticing the insects using a typical UV LED has problems such as noise generation by a suction fan due to attachment of dead insects such as mosquitoes to the suction fan, escape of mosquitoes from the insect trap or insufficient suctioning of mosquitoes into the insect trap due to difficulty in speed control of the suction fan, and low suction efficiency or high power consumption due to difficulty in control of an air stream generated by the insect trap.

KR 2012 0078220 A discloses an insect trap configured to entice and collect insects using UV light, comprising a main body; an insect passage unit detachably coupled to an upper side of the main body and selectively allowing insects to pass therethrough; an air collector disposed at a lower side of the main body; a motor disposed between the air collector and the insect passage unit; a suction fan disposed between the motor and the air collector and rotated by the motor; a UV LED installation unit disposed above the insect passage unit and provided with a UV LED module; a buttress separating the UV LED installation unit from the main body while supporting the UV LED installation unit above the main body while so as to allow insects to be suctioned into a space between the main body and the UV LED installation unit; and an insect collector for collecting insects detachably coupled to a lower side of the air collector and including a mesh through which air is discharged from the insect trap by the suction fan; wherein the insect passage unit has a lattice shape including a plurality of insect passage holes selectively allowing insects to pass therethrough, the plurality of insect passage holes being formed by a circular member and a radial member wherein the UV LED module comprises at least one chip-on-board (COB) type UV LED chip or at least one LED package mounted on a support substrate.

WO 2015/043179 A1 discloses an insect trap, comprising a housing which is provided with an air inlet and an air outlet; a fan device which is provided inside the housing and used to generate an airflow passing through the housing so as to suck mosquitoes therein through the air inlet; a collection device which is connected to the air outlet of the housing to collect insects sucked in; and a bait box and a light-emitting device for luring mosquitoes, wherein the bait box is disposed adjacent to the air inlet to dissipate bait outwards upstream of the air inlet in the direction of the air flow towards the housing. WO 2014/199388 A1 discloses a trapping device designed to kill mosquitoes.

KR 2015 0112755 A discloses an insect trap using an UV LED lamp.

### [Disclosure]

### [Technical Problem]

Embodiments of the present disclosure provide an insect trap that is more eco-friendly, provides a more convenient manufacturing process, and secures efficiency in enticing and suctioning of insects.

Embodiments of the present disclosure provide an insect trap that can generate a suitable air stream velocity for suctioning mosquitoes while minimizing noise.

Embodiments of the present disclosure provide an insect trap that is provided with a UV LED module having high efficiency in enticement of mosquitoes and emitting light having wavelengths and intensity harmless to humans.

### [Technical Solution]

The present invention provides an insect trap according to claim 1. Further embodiments are presented in the dependent claims.

In accordance with one exemplary embodiment, there is provided an insect trap configured to entice and collect insects using UV light, the insect trap including: a main body; an insect filter detachably coupled to an upper side of the main body and selectively allowing insects to pass therethrough; an air collector disposed at a lower side of the main body; a motor disposed between the air collector and the insect filter; a suction fan disposed between the motor and the air collector and rotated by the motor; a UV LED installation unit disposed above the insect filter and provided with a UV LED module; and an insect collector for collecting insects detachably coupled to a lower side of the air collector and including a mesh through which air is discharged from the insect trap by the suction fan.

The UV LED module may emit light having a wavelength of 340 nm to 390 nm.

An air stream generated by the suction fan between the insect filter and the UV LED installation unit may have a velocity of 0.5 m/s to 3 m/s.

Exemplary embodiments provide an insect trap that can entice insects using UV light, can generate heat for controlling a temperature condition suitable for enticement of insects, or can generate carbon dioxides, thereby further improving insect enticement effects. The UV LED module may be turned on or off through dimming control.

### [Advantageous Effects]

The insect trap according to the exemplary embodiments can provide an ecofriendly insecticidal method.

The insect trap according to the exemplary embodiments can selectively collect insects by controlling a size of an opening of the insect filter and, particularly, can prevent insects having a larger volume than mosquitoes from being introduced into the insect trap, thereby improving durability of the suction fan while suppressing noise generation.

The insect trap according to the exemplary embodiments includes the suction fan disposed below the motor and can suppress noise generation by controlling the rotational speed and diameter of the suction fan.

The insect trap according to the exemplary embodiments can generate UV light harmless to humans and capable of effectively attracting insects by controlling the wavelength and intensity of UV light emitted from a UV LED module.

The insect trap according to the exemplary embodiments allows the UV LED module to emit spot light to improve an insect attraction effect.

The insect trap according to the exemplary embodiments can generate a high air stream speed providing high insect suction efficiency by controlling the rotational speed of the suction fan and the heights of a main body, an insect collector, and a buttress of the insect trap.

The insect trap according to the exemplary embodiments can suppress noise generation while generating an air stream speed providing high insect suction efficiency by controlling sizes or area ratios of insect passage openings, air collector side openings, an air exhaust port, and a mesh member.

The insect trap according to the exemplary embodiments is provided with a photocatalyst filter to provide a deodorization function using UV light emitted from the UV LED module.

The insect trap according to the exemplary embodiments can maximize the insect attraction effect not only by attracting insects using UV light, but also by generating heat while selectively generating carbon dioxide.

The insect trap according to the exemplary embodiments can generate UV light capable of destroying insects collected through efficient use of energy by controlling the wavelength and intensity of UV light emitted from the UV LED module.

The insect trap according to the exemplary embodiments can improve insect attraction efficiency by changing decoy light in various ways.

### [Description of Drawings]

FIG. 1 is a side view of an insect trap according to an exemplary embodiment.
FIG. 2 is a side-sectional view of the insect trap according an exemplary embodiment.
FIG. 3 is an exploded perspective view of an insect trap according an exemplary embodiment.
FIG. 4 is a perspective view of an insect filter of the insect trap according to an exemplary embodiment.
FIG. 5 is a perspective view of an air collector of the insect trap according to an exemplary embodiment.
FIG. 6 is a perspective view of an insect collector of the insect trap according to an exemplary embodiment.
FIG. 7 to FIG. 9 are views of UV LED modules according to exemplary embodiments.
FIG. 10 is a block diagram illustrating an electrical connection relationship between components of the UV LED module according to an exemplary embodiment.
FIG. 11 to FIG. 13 are waveforms depicting a relationship between LED drive current or drive voltage and dimming level of the UV LED module according to an exemplary embodiment.

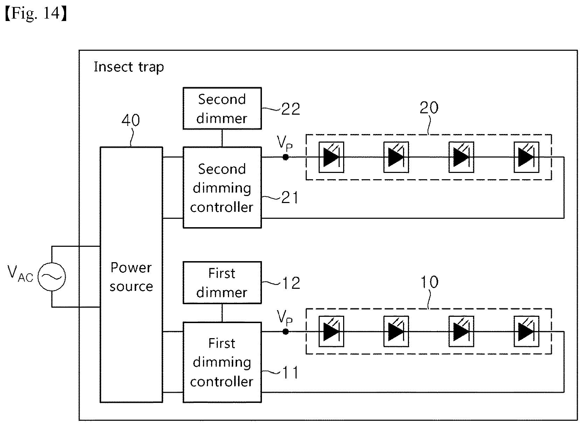

FIG. 14 is a block diagram illustrating an electrical connection relationship between components of the UV LED module according to an exemplary embodiment.

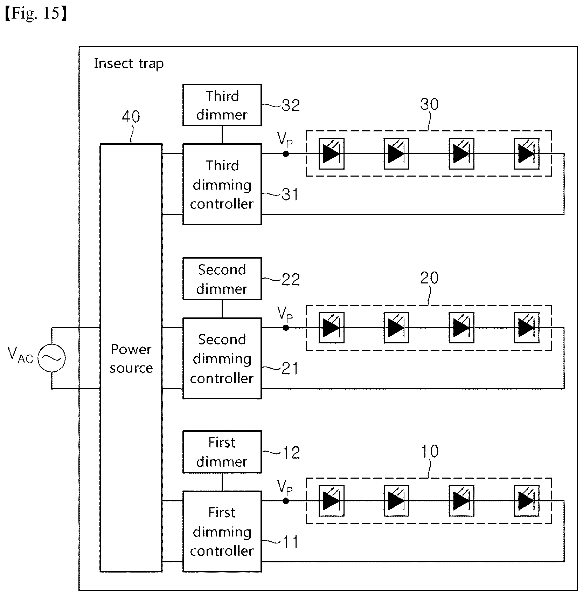

FIG. 15 is a block diagram illustrating an electrical connection relationship between components of the UV LED module according to an exemplary embodiment.

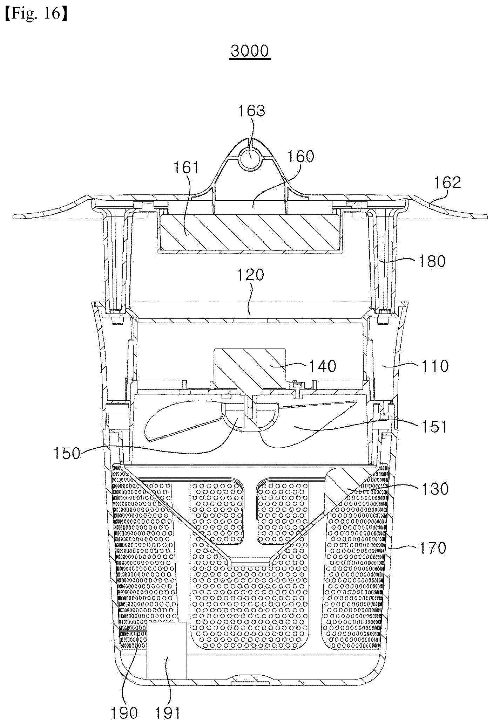

FIG. 16 is a side-sectional view of the insect trap according an exemplary embodiment.

### [DETAILED DESCRIPTION]

Hereinafter, embodiments of the present disclosure will be described in detail with reference to the accompanying drawings.

When an element or layer is referred to as being "disposed above" or "disposed on" another element or layer, it can be directly "disposed above" or "disposed on" the other element or layer or intervening elements or layers can be present. As used herein, spatially relative terms such as "upper" and "lower" are defined with reference to the accompanying drawings. Thus, it will be understood that "upper" can be used interchangeably with "lower".

Throughout the specification, like reference numerals denote like elements having the same or similar functions. In addition, as used herein, the singular forms "a," "an," and "the" may be intended to include the plural forms as well, unless context clearly indicates otherwise. Further, the terms "comprises," "comprising," "including," and "having" are inclusive and therefore specify the presence of stated features, integers, steps, operations, elements, and/or components, but do not preclude the presence or addition of one or more other features, integers, steps, operations, elements, components, and/or groups thereof. The steps, processes, and operations described herein are not to be construed as necessarily requiring their performance in the particular order discussed or illustrated, unless specifically identified as an order of performance. It is also to be understood that additional or alternative steps may be employed.

Hereinafter, embodiments of the present disclosure will be described in detail with reference to the accompanying drawings.

As described above, despite some merits such as eco-friendliness and harmlessness to humans, a typical insect trap configured to collect insects, for example, mosquitoes, using a suction fan after enticing the mosquitoes using decoy light has problems such as very low enticing efficiency, high power consumption, and severe noise generation. Accordingly, in order to solve the problems of the typical insect trap, the inventors of the present disclosure carried out repeated studies and production tests to develop an eco-friendly insect trap that can maximize effects in enticing of insects, for example, mosquitoes, and provide improved suctioning effects without power loss while suppressing noise generation by controlling each component of the insect trap.

### [Embodiment 1]

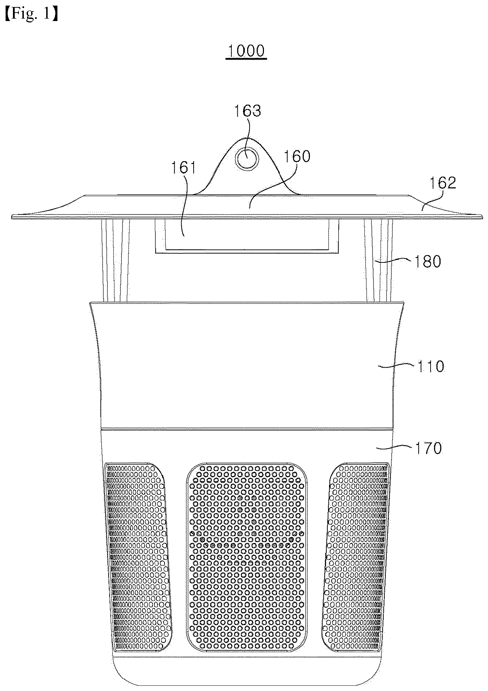

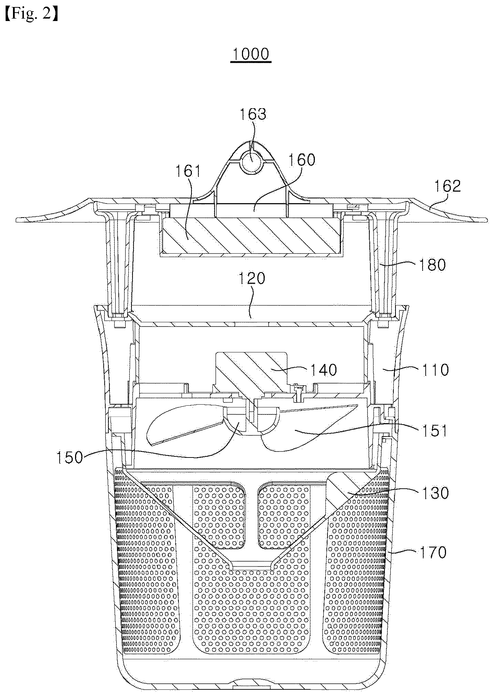

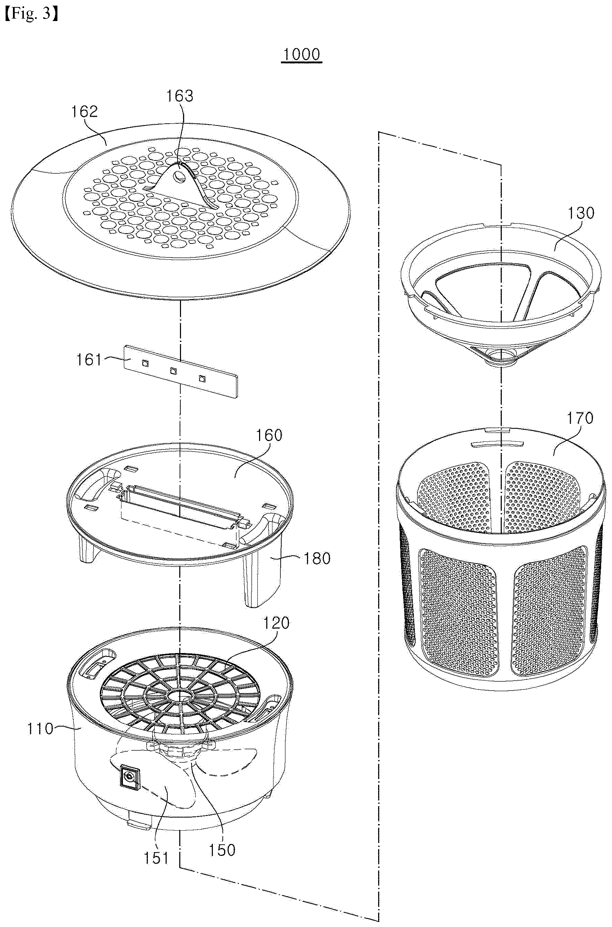

Figure 1 is a side view of an insect trap according to a first embodiment of the present disclosure, Figure 2 is a side-sectional view of the insect trap according to the first embodiment of the present disclosure, and Figure 3 is an exploded perspective view of the insect trap according to the first embodiment of the present disclosure.

Referring to Figure 1 to Figure 3, each component of an insect trap 1000 according to a first embodiment will be described in detail.

In order to collect insects after enticing the insects using UV light, the insect trap 1000 according to one embodiment includes: a main body 110; an insect passage unit 120 detachably coupled to an upper side of the main body 110 and selectively allowing insects to pass therethrough; an air collector 130 disposed at a lower side of the main body 110; a motor 140 disposed between the air collector 130 and the insect passage unit 120; a suction fan 150 disposed between the motor 140 and the air collector 130 and rotated by the motor 140; a UV LED installation unit 160 disposed above the insect passage unit 120 and provided with a UV LED module 161; and an insect collector 170 detachably coupled to a lower side of the air collector 130 and collecting insects.

As used herein, insects are not limited to a particular kind of insect and may refer to various kinds of winged insects, particularly, mosquitoes.

### Main body 110

Although the main body is not limited to a particular shape and material, the main body 110 may have a cylindrical shape in order to receive the suction fan 150 therein and may be formed of a commercially available plastic material so as to allow indoor or outdoor use of the insect trap for a long period of time without significant increase in manufacturing costs. The main body 110 is open at upper and lower sides thereof to allow an air stream to pass through the upper and lower sides thereof. The main body 110 has a height of 2 cm to 20 cm, preferably 3 cm to 10 cm.

Referring to Figure 2 and Figure 3, the insect passage unit 120, the motor 140, and the suction fan 150 are mounted inside the main body 110 from the upper side of the main body 110 to the lower side thereof.

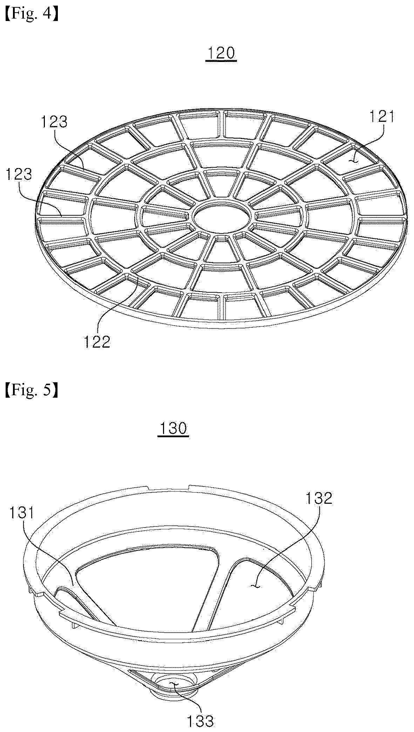

Figure 4 is a perspective view of the insect passage unit 120 of the insect trap according to the first embodiment of the present disclosure.

Referring to Figure 4, the insect passage unit 120 has a lattice shape including a plurality of insect passage holes 121 selectively allowing insects to pass therethrough, and the plurality of insect passage holes may be defined by circular members 122 and radial members 123. Specifically, the size of the insect passage holes 121 may be adjusted by taking into account an average size of insects to be collected, and for the insect passage unit 120 having a lattice shape as shown in Figure 4, the size of the insect passage holes 121 can be effectively controlled with low manufacturing costs.

A typical insect trap configured to collect insects using a suction fan in the related art has problems of a short replacement cycle of the insect collector due to collection of insects, such as butterflies, dragonflies and flies, which have a larger volume than mosquitoes, and negative influence on the ecosystem due to collection of beneficial insects as well as harmful insects. Moreover, the typical insect trap has problems such as decrease in lifespan of the motor and noise generation by the suction fan due to attachment of large insects to the suction fan. Accordingly, the inventors of the present disclosure developed the insect trap 1000 that allows the size of the insect passage holes 122 to be controlled such that the insect trap can selectively suction insects and includes an economically feasible insect passage unit 120.

The plural insect passage holes 121 are divided from one another by pluralities of circular members 122 and radial members 123 arranged around the center of the insect passage unit 120 and have an arc shape having a central angle of 20° to 40°, and each of the circular members 122 is separated a distance of 1.0 cm to 1.5 cm from another adjacent circular member 123. Within these ranges, each of the insect passage holes 121 may have an area of 100 mm2 to 225 mm2. Thus, the insect passage holes 121 allow selective passage of insects, particularly, mosquitoes, therethrough, while preventing collection of large insects such as butterflies, dragonflies, flies, and the like into the insect trap 1000, thereby preventing deterioration in durability of the motor while suppressing noise generation from the suction fan 150.

Furthermore, the suction fan 150 may be controlled such that insects are suctioned through a lower portion of the suction fan 150 instead of being attached to the suction fan 150. In a typical insect trap configured to collect insects using a typical suction fan, the insects are attached to fan blades and cause a non-uniform rotational radius of the suction fan, thereby causing deterioration in durability of the motor and noise generation. However, when the rotational speed of the suction fan is reduced in order to prevent insects from being attached to the fan blades, there is a problem of significant reduction in collection efficiency with respect to insects adjacent the insect trap. That is, since insects tend to stop flying at an air stream velocity of 0.8 m/s or more and try to escape from an air stream at an excessively high air stream velocity, the insect trap 1000 according to the present disclosure prevents insects from being attached to the fan blades 151 while causing mosquitoes to stop flying and being collected therein through a suction air stream generated by the suction fan 150.

To this end, the number of fan blades 151 may be two to seven, preferably three or four, and the suction fan 150 may have a rotational speed of 1500 rpm to 2700 rpm, preferably 1900 rpm to 2300 rpm. The fan blades 151 may be formed in a rounded shape having a constant or variable radius of curvature instead of a flat shape, and may have a height of 5 mm to 30 mm from a lowermost end to an uppermost end thereof. The suction fan 150 may have a diameter of 60 mm to 120 mm, preferably 80 mm to 110 mm. In some embodiments, a minimum distance between the suction fan 150 and an inner wall of the main body 110 may be controlled to 1 mm to 5 mm in order to minimize noise generation by the suction fan 150 while effectively generating a suction air stream.

Furthermore, a ratio of vertical distance from the main body 110 to the UV LED installation unit 160 to height of the main body 110 may range from 1:1 to 1:2, and a ratio of vertical distance from the insect collector 170 to the UV LED installation unit 160 to height of the insect collector 170 may range from 1:0.5 to 1:2. Within these ratios, the insect trap 100 can easily suction insects adjacent the insect trap 1000 while preventing the insects from being attached to the suction fan 150.

Accordingly, within these numerical ranges, the insect trap 1000 can control an air stream generated between the insect passage unit 120 and the UV LED installation unit 160 by the suction fan 150 to have a speed of 0.5 m/s to 2.5 m/s, preferably 0.6 m/s to 2.5 m/s, more preferably 0.7 m/s to 2.5 m/s, for example, 0.7 m/s to 2.0 m/s, and can cause insects to stop flying and being collected with high efficiency into the insect collector 170 without attachment of the insects to the suction fan 150, while suppressing noise generation by the suction fan 150.

With the structure wherein the motor 140 is disposed below the insect passage unit 120 and the suction fan 150 is provided to a lower side of the motor 140, the insect trap 1000 can considerably reduce noise generation by the motor 140 and the suction fan 150.

### Air collector 130

Figure 5 is a perspective view of an air collector of the insect trap according to an exemplary embodiment.

The air collector 130 is provided to the lower side of the main body 110, and may include air collector ribs 131, air collector side openings 132, and an air exhaust port 133 such that insects suctioned by the suction fan 150 can be discharged to the insect collector 170. The air collector 130 has a conical shape, the diameter of which gradually decreases with increasing distance from the suction fan 150. Preferably, the air collector 130 has a conical shape in order to allow an air stream generated by the suction fan 150 to effectively flow to the insect collector 170 disposed at a lower side of the insect trap without dispersing the air stream, and includes the air collector side openings 132 to allow the air stream generated by the suction fan 150 to effectively escape from the insect trap 1000. The air collector side openings 132 are not limited to a particular shape and may have, for example, a mesh shape, and the area of the side openings formed in the mesh shape may be controlled to prevent insects, particularly, mosquitoes, from passing therethrough

Accordingly, the air collector 130 further includes the air collector side openings 132, the size of which is controlled, thereby preventing insects from escaping from the insect trap 1000 when the insects are suctioned into the insect collector 170 by the suction fan 150.

On the other hands, a ratio of diameter of the air exhaust port 133 to diameter of the suction fan 150 may range from 1:2 to 1:9, preferably 1:3 to 1:5. Within this range of ratio, the insect trap enables easy control of air stream velocity by the suction fan 150.

### Insect collector 170

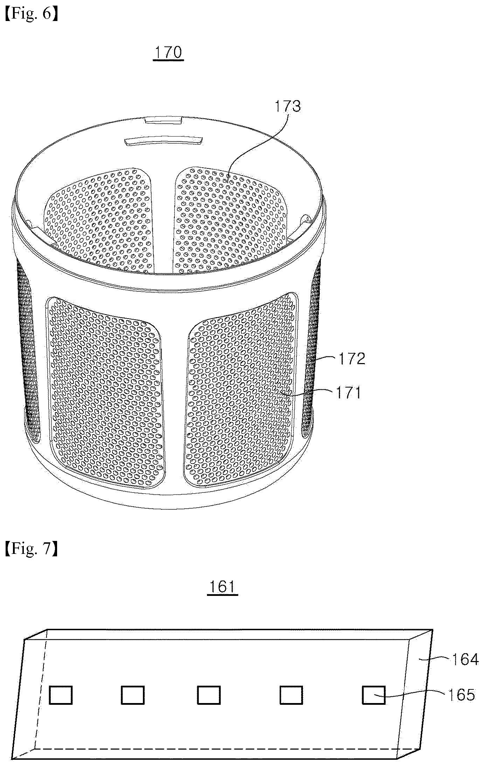

FIG. 6 is a perspective view of an insect collector of the insect trap according to an exemplary embodiment.

Referring to Figure 6, the insect collector 170 may include at least one mesh member 171 through which air is discharged to the outside by the suction fan 150. The mesh member 171 may include mesh ribs 172 and mesh openings 173 formed between the mesh ribs 172 such that an air stream generated by the suction fan 150 is discharged from the insect collector 170 through the mesh openings 173. The mesh opening 173 may have a diameter of 1 mm to 3 mm to provide a smooth air flow while preventing the collected insects from escaping therethrough.

Furthermore, a ratio of total area of the insect passage holes 121 to total area of the mesh openings 173 may range from 1:1.2 to 1:3.0, preferably from 1:1.8 to 1:2.5. Within this range of ratio, insects collected in the insect collector 170 do not obstruct an air stream discharged from the insect trap 1000 even in the case where the insects collected in the insect collector 170 occupy 1/2 the volume of the insect collector 170.

That is, the insect collector 170 allows an air stream generated by the suction fan 150 to be effectively discharged from the insect trap 1000, whereby mosquitoes collected in the insect collector 170 are dried and killed.

### UV LED installation unit 160

Referring to Figure 1 to Figure 3, the UV LED installation unit 160 may have a plate shape. Specifically, the UV LED installation unit 160 may be formed in a similar shape and/or size to the shape and size of the main body 110. For example, in an embodiment wherein the main body 110 has a circular shape, the UV LED installation unit 160 may have a disk shape having a similar size to the size of the main body 110.

With this structure, the UV LED installation unit 160 restricts flow of an air stream generated by the suction fan 150 into a space defined between the UV LED installation unit 160 and the main body 110, thereby improving efficiency of generating a suction air stream into the insect trap 1000. As a result, the suction fan 150 is not required to be rotated at high rpm, thereby minimizing noise generation.

In some embodiments, the insect trap may further include a buttress 180 configured to support the UV LED installation unit 160 above the main body 110 while separating the UV LED installation unit 160 from the main body 110 so as to allow insects to be suctioned into the space between the main body 110 and the UV LED installation unit 160, and the UV LED installation unit 160 may include a UV LED module 161 and may further include a UV LED installation unit cap 162.

Although the shape and number of buttresses 180 are not particularly limited, two buttresses 180 are disposed to face each other in order to minimize restriction of an insect introduction area by the buttresses 180 while stably supporting the UV LED installation unit 160.

The length of the buttress 180 may be adjusted such that the UV LED installation unit 160 is separated a distance of 1 cm to 10 cm, preferably 2 cm to 5 cm, from the main body 110 in the vertical direction. If the separation distance between the UV LED installation unit 160 and the main body 110 in the vertical direction is less than 2 cm, the space defined between the UV LED installation unit 160 and the main body 110, into which insects are introduced, becomes too small, thereby causing deterioration in insect collection efficiency, and if the separation distance therebetween is greater than 5 cm, the air stream generated by the suction fan 150 does not have sufficient intensity, thereby causing deterioration in insect collection efficiency.

Accordingly, when insects are enticed by UV light and approach the insect trap 1000, the insects are suctioned into the space between the main body 110 and the UV LED installation unit 160 by the suction air stream generated by the suction fan 150, pass through the insect passage unit 120 and the suction fan 150, and finally collected by the insect collector 170 disposed under the air collector 130.

Referring to Figure 3, the UV LED module 161 may be mounted on a lower surface of the UV LED installation unit 160. Specifically, as shown in Figure 3, the UV LED installation unit cap 162 detachably mounted on an upper side of the UV LED installation unit 160 is detached from the UV LED installation unit 160, and the UV LED module 161 is mounted on the UV LED installation unit 160 by inserting the UV LED module 161 into the UV LED installation unit 160 from an upper side to a lower side of the UV LED installation unit 160. The UV LED module 161 mounted on the UV LED installation unit 160 may be electrically connected to a power source.

In the insect trap 1000 according to the first embodiment, the UV LED module 161 may be mounted on the UV LED installation unit 160 such that light emitted from the UV LED module 161 travels in a horizontal direction with respect to the ground. Insects generally stay at a height of about 1.5 m from the ground for the longest period of time upon flying. Thus, in the structure wherein the insect trap 1000 is installed at a height of about 1.5 m from the ground, insects are strongly stimulated by light emitted from the UV LED module 161 in the horizontal direction with respect to the ground and can be effectively enticed into the insect trap 1000.

Furthermore, as shown in Figure 3, the UV LED installation unit cap 162 is formed on an upper surface thereof with a UV LED installation unit cap holder 163 to hold the insect trap 1000 to a tree branch and the like at a height of about 1.5 m when used outdoors.

The UV LED installation unit 160 includes a UV LED module cover having a shape corresponding to the UV LED module 161 and mounted on the UV LED installation unit 160 to protect the UV LED module 161 to prevent damage to the UV LED module 161 by external dust or insects. Preferably, the UV LED module cover is transparent.

The UV LED module cover may be machined in various shapes so as to act as a lens capable of spreading light emitted from the UV LED module 161 or collecting the light in a predetermined direction. The UV LED module cover may include, for example, glass, quartz, and the like. The UV LED module cover may be formed of a polymer that allows easier treatment and exhibits better moldability and higher durability than glass and quartz. However, in a molecular structure of the polymer, an electron cloud having a resonance frequency corresponding to UV light is placed around an atomic nucleus in a molecular structure and absorbs light having a wavelength of 400 nm or less (in the UV wavelength band), thereby causing significant deterioration in light transmittance, and the polymer itself can be degraded by UV light. Thus, the polymer is not generally used as a material for the UV LED module cover.

However, since polymethyl methacrylate (PMMA) having a monomer ratio of about 80% or more and mainly composed of carbon and hydrogen has a thin electron cloud to provide high UV transmittance, the UV LED module cover may be formed of PMMA.

Alternatively, as a stable material not reacting with UV light, a fluorine-based polymer may be used as a material for the UV LED module cover. By way of example, by taking into account the fact that the fluorine-based polymer has lower UV transmittance than quartz or PMMA, it is desirable that the UV LED module cover be formed to have flexibility and a thin thickness. That is, when using the fluorine-based polymer as the material for the UV LED module cover, UV transmittance of the UV LED module cover is taken into account, and since the fluorine-based polymer has lower UV transmittance than quartz or PMMA, the UV transmittance of the UV LED module cover increases with decreasing thickness thereof. However, the UV LED module cover having a thin thickness can be easily broken due to brittleness of polymers. Thus, it is desirable that the UV LED module cover be formed of a flexible material in order to reduce brittleness.

Although not shown in Figure 3, a material capable of reflecting UV light emitted from the UV LED module 161 may be attached to or coated onto a lower surface of the UV LED installation unit 160. Silver or aluminum may be used as the material capable of reflecting the UV light, without being limited thereto, and may be coated onto the lower surface of the UV LED installation unit 160. The lower surface of the UV LED installation unit 160 may further include a round or irregular pattern having a variety of shapes to scatter the light emitted from the UV LED module 161.

Referring to Figure 1 to Figure 3, the UV LED installation unit cap 162 may be mounted on an upper surface of the UV LED installation unit 160 and extends beyond the UV LED installation unit 160 in the horizontal direction. The material and shape of the UV LED installation unit cap 162 may be the same as those of the UV LED installation unit 160, without being limited thereto. For example, in an embodiment wherein the UV LED installation unit 160 has a circular shape, the UV LED installation unit cap 162 may have a shape coaxial with the UV LED installation unit 160 and having a larger diameter than the UV LED installation unit 160.

Preferably, the UV LED installation unit cap 162 has a 3.5 cm to 7 cm greater diameter than the UV LED installation unit 160. If the diameter of the UV LED installation unit cap 162 is greater than the UV LED installation unit 160 by a length of less than 3.5 cm, the air stream generated by the suction fan 150 can be dispersed instead of being collected towards the side surface or the lower surface of the UV LED installation unit 160, and if the diameter of the UV LED installation unit cap 162 is greater than the UV LED installation unit 160 by a length of greater than 7 cm, there can be a problem of unnecessarily blocking the light emitted from the UV LED module 161. Specifically, the UV LED installation unit 160 may have a diameter of 8 cm to 20 cm and the UV LED installation unit cap 162 may have a diameter of 10 cm to 25 cm. Within these diameter ranges, the diameter of the UV LED installation unit cap 162 is greater than the diameter of the UV LED installation unit 160 by a length of 3.5 cm to 7 cm.

In the insect trap 1000 according to the first embodiment, wherein the UV LED installation unit 160 and the UV LED installation unit cap 162 have diameters within the above ranges, the air stream generated by the suction fan 150 has a speed of 0.5 m/s to 3 m/s as measured in a region extending from the UV LED installation unit cap 162 to an upper end of the main body 110 in the vertical direction, thereby providing a suitable air stream velocity causing mosquitoes to stop flying and be suctioned into the insect trap 1000.

As described above, the UV LED installation unit 161 is separated a distance of 2 cm to 5 cm from the insect passage unit 120 and the diameter of the UV LED installation unit cap 162 is adjusted to maintain the air stream generated by the suction fan 150 without being influenced by external wind, whereby the insect trap can stably suction insects, enticed by UV light from the UV LED module, into the insect passage unit 120.

### UV LED module 161, 261, 361

Figure 7 to Figure 9 are views of UV LED modules according to embodiments of the present disclosure.

The UV LED modules 161, 261, 361 can emit at least one type of light selected from among UV light, visible light and IR light, preferably UV light. With regard to insect enticing wavelengths, reports say that flies and leafhoppers are enticed by light at a wavelength of about 340 nm or about 575 nm, and moths and mosquitoes are enticed by light having a wavelength of about 366 nm. In addition, reports say that other general harmful insects are relatively enticed by light having a wavelength of about 340 nm to 380 nm. Moreover, with regard to insect enticing wavelengths in the visible light range, Korean Patent Publication No. 2013-0049475 A and No. 2014-0010493 A disclose enticing activity of insects by white, yellow, red, green and blue light.

Preferably, the UV LED modules 161, 261, 361 emit light having a wavelength of 340 nm to 390 nm. More preferably, the UV LED modules 161, 261, 361 are controlled to emit light having a wavelength of about 365 nm, which strongly entices mosquitoes and has low harmfulness to humans.

Each of the UV LED modules 161, 261, 361 may include one or more chip-on-board (COB) type UV LED chips 165 or one or more LED packages mounted on a support substrate 164. The UV LED chips 165 or the UV LED packages may be arranged in a plurality of rows. Alternatively, the UV LED chips 165 or the UV LED packages may be disposed in a zigzag arrangement in order to prevent the support substrate 164 from overheating.

The support substrate 164 may have a panel shape having a predetermined thickness and include a printed circuit board (PCB) having an integrated circuit or interconnection lines therein. By way of example, the support substrate 164 may be a printed circuit board having a circuit pattern printed in a region on which the UV LED chip 165 will be mounted, and may be composed of a material such as a metal, a semiconductor, a ceramic, a polymer, and the like.

Specifically, each of the UV LED modules 161, 261, 361 may have a structure wherein the UV LED chips 165 are mounted on one surface of the PCB having an elongated plate shape. In each of the UV LED modules 161, 261, 361, the plurality of UV LED chips 165, for example, 4 to 10 UV LED chips 165 are arranged at certain intervals on the PCB in a longitudinal direction of the PCB. Heat dissipation fins may be provided to the other surface of the PCB to dissipate heat generated from the UV LED chips 165, and both ends of each of the UV LED modules 161, 261, 361 may be provided with terminals which will be connected to a power source to supply power to the PCB.

Although the insect trap may be further provided with a light guide plate and a diffusive sheet to allow the UV LED chips or the UV LED packages to emit sheet light, as needed, the UV LED chip or the UV LED package according to the exemplary embodiments may be disposed to emit spot light. Advantageously, a device for emitting spot light can be more easily manufactured while securing a higher insect attraction effect than a device for emitting sheet light.

Each of the UV LED modules may include a plurality of UV LED chips for emitting spot light, specifically 2 to 10 UV LED chips, preferably 3 to 6 UV LED chips, mounted on the support substrate.

The spot light source may be separated a distance of 2 mm to 50 mm, preferably, 3 mm to 30 mm, more preferably 3 mm to 20 mm, from another spot light source. If the distance between the spot light sources is less than 2 mm, excessive heat can be generated from the UV LED chips or the UV LED packages, thereby causing deterioration in durability of the UV LED chips or the UV LED packages. If the distance between the spot light sources exceeds 50 mm, insect attraction efficiency of the insect trap can be deteriorated.

Each of the UV LED modules 161, 261, 361 may be manufactured to consume a power of 800 mA to 1,500 mA at an input voltage of 10V to 15V and an input current of 75 mA to 100 mA. Within this range, the UV LED modules 161, 261, 361 can effectively entice insects by emitting UV light having a wavelength of 365 mm and harmless to humans while minimizing power consumption.

In each of the UV LED modules 161, 261, 361, the UV LED chips 165 or the UV LED packages may be mounted on the support substrate 164 such that the UV LED chips 165 or the UV LED packages mounted on one surface of the support substrate 164 do not overlap the UV LED chips 165 or the UV LED packages mounted on the other surface of the support substrate 164. The UV LED chips 165 or the UV LED packages may be arranged in a plurality of rows or in a zigzag arrangement, without being limited thereto. Accordingly, the insect trap 1000 according to the first embodiment can minimize power consumption while enlarging an irradiation range, and can improve durability of each of the UV LED modules 161, 261, 361 through effective dissipation of heat generated from the UV LED chips 165.

While electric energy supplied to the UV LED modules 161, 261, 361 is converted into light energy and heat energy, heat is generated from the UV LED chips 165 and a space separated a distance of 1 cm or less from the UV LED modules 161, 261, 361 may have a temperature of 50°C to 60°C. Since insects, particularly, mosquitoes, are strongly enticed towards a material having a temperature of about 38°C to 40°C, which is similar to mammal body temperature, the insect trap 1000 can strongly entice insects through heat generated from the UV LED modules 161, 261, 361 in addition to enticing effects of the UV LED modules 161,261,361.

Accordingly, the insect trap 1000 according to the first embodiment of the present disclosure employs the UV LED modules 161, 261, 361 manufactured to consume a power of 800 mA to 2,000 mA, preferably 1,000 mA to 1,500 mA, at an input voltage of 12V and an input current of 75 mA to 85 mA, and includes the UV LED chips 165 or the UV LED packages mounted on the support substrate 164 such that the UV LED chips 165 or the UV LED packages mounted on one surface of the support substrate 164 do not overlap the UV LED chips 165 or the UV LED packages mounted on the other surface of the support substrate. Thus, the insect trap 1000 according to the first embodiment can emit light harmless to humans and having high insect enticing efficiency while minimizing power consumption and can generate heat such that surroundings of the insect trap 1000 have a temperature providing high insect enticing effects.

### [Embodiment 2]

An insect trap 2000 (not shown) according to a second embodiment of the present disclosure has the same configuration as the insect trap according to the first embodiment except for a photocatalyst filter. Hereinafter, the photocatalyst filter will be described in detail.

The photocatalyst filter may be disposed at any location in the insect trap 2000 so long as the photocatalyst filter can receive UV light emitted from the UV LED module 161. Preferably, the photocatalyst filter is disposed on the lower surface of the UV LED installation unit 160 and/or the lower surface of the UV LED installation unit cap 162.

Preferably, the photocatalyst filter is embedded in the insect trap instead of being provided in a protrusion structure. Specifically, in a side-embedded type wherein the photocatalyst filter is embedded in a side surface of the insect trap 1000 to contact an air stream generated in the insect trap 1000, an inner space of the insect trap 1000 can be efficiently constituted without obstructing suction of insects and air into the insect trap 1000.

The photocatalyst filter may perform a deodorization function using UV light emitted from the UV LED module 161 mounted on the lower surface of the UV LED installation unit 160 as a catalyst.

The photocatalyst filter may be formed by depositing a photocatalyst layer on a frame. By way of example, the photocatalyst filter may be formed by embedding a photocatalyst layer in a porous material, such as metal foam and carbon foam, or in a ceramic material.

The photocatalyst layer may include at least one compound selected from the group consisting of, for example, titanium oxide (TiO₂), silicon oxide (SiO₂), tungsten oxide (WO₃), zinc oxide (ZnO), zirconium oxide (ZrO₂), tin oxide (SnO₂), cerium oxide (CeO₂), tungsten oxide (WO₃), iron oxide (FeO₃), zinc sulfide (ZnS), cadmium sulfide (CdS), and strontium titanate (SrTiO3). Preferably, the photocatalyst layer is realized by a titanium oxide (TiO₂) coating layer.

The photocatalyst filter may generate radicals, which decompose organic materials in air surrounding the photocatalyst filter, thereby providing an effect of purifying air around the insect trap 2000.

The photocatalyst layer can generate CO₂, which has high efficiency in enticement of mosquitoes, while providing the deodorization effect. Namely, the UV LED installation unit 160 may be provided on the lower surface thereof with the photocatalyst filter that can generate carbon dioxide using UV light emitted from the UV LED module 161 as catalyst. Preferably, the UV LED installation unit 160 and/or the UV LED installation unit cap 162 are provided on the lower surfaces thereof with the photocatalyst filter that can generate carbon dioxide using UV light emitted from the UV LED module 161 as catalyst.

Specifically, when the photocatalyst layer is irradiated with light emitted from the UV LED module 161 and inducing photocatalysis reaction, radicals exhibiting strong reducibility can be generated through photocatalysis reaction known in the art. Then, an organic component around the photocatalyst layer can be decomposed by the radicals to generate carbon dioxide. Carbon dioxide is known as a gas capable of enticing insects, particularly, mosquitoes. For example, light inducing photocatalysis reaction may be UV light in a wavelength band of about 200 nm to 400 nm. That is, since light inducing photocatalysis reaction has not only a function of generating radicals when reaching the photocatalyst layer, but also a function of enticing insects, the wavelength of light may be determined by taking into account two aspects, that is, photocatalysis reaction and direct enticement of insects.

In some embodiments, in order to promote generation of carbon dioxide, an enticing substance such as lactic acid, amino acid, sodium chloride, uric acid, ammonia and protein decomposition substances may be provided to the photocatalyst filter. By way of example, as a method of providing the enticing substance, the enticing substance may be deposited onto the photocatalyst layer in the photocatalyst filter or may be periodically or aperiodically sprayed onto the photocatalyst layer, without being limited thereto. As a result, the concentration of carbon dioxide increases, thereby improving insect enticing efficiency.

That is, the insect trap 2000 according to the second embodiment of the present disclosure can use not only light and heat generated from the UV LED module 161 but also carbon dioxide as insect enticing media, thereby significantly improving efficiency in enticing insects, particularly, mosquitoes.

### [Embodiment 3]

An insect trap 3000 according to a third exemplary embodiment may further include an insecticidal UV LED installation unit 190, on which an insecticidal UV LED module 191 is mounted. The insecticidal UV LED module 191 may emit light having a wavelength of 200 nm to 300 nm.

The insect trap according to the third exemplary embodiment is similar to the insect trap according to the first exemplary embodiment except that the insect trap 3000 further includes the insecticidal UV LED installation unit 190, on which the insecticidal UV LED module 191 is mounted. Thus, the following description will focus on the insecticidal UV LED installation unit 190, on which the insecticidal UV LED module 191 is mounted.

Although not limited to a particular location, the insecticidal UV LED installation unit 190 is preferably mounted on the insect collector 170 in which collected insects stay for the longest period of time.

That is, the insect trap 3000 can destroy insects, particularly mosquitoes, collected in the insect collector 170 not only by drying the insects, but also by irradiation with UVC though additional installation of the insecticidal UV LED module 191, which can secure good energy efficiency and insecticidal efficiency while rapid destroying the insects. Specifically, the insecticidal UV LED module 191 may be configured to emit UVC having a wavelength of 200 nm to 300 nm.

In addition, the insecticidal UV LED module 191 is controlled to generate an electrical energy of 1 kJ upon application of a voltage of 12 V to 20 V and an input current of 200 mA to 280 mA, thereby enabling destruction of insects collected in the insect collector with low energy for a relatively short time.

### [Embodiment 4]

An insect trap 4000 (not shown) according to a fourth exemplary embodiment is similar to the insect trap according to the first exemplary embodiment except that the UV LED module 161 allows dimming control. Thus, the following description will focus on dimming control with respect to the UV LED module 161.

The insect trap 4000 according to the fourth exemplary embodiment is based on the fundamental concept that insect attraction efficiency can be further improved upon emission of decoy light while changing on/off, intensity and emission cycle of decoy light than upon emission of the decoy light with a constant intensity.

As used herein, the term "dimming control" includes not only the concept of controlling light output of a light emission unit, but also all control operations for controlling operation of the light emission unit, including on/off of the light emission unit, emission cycle of the light emission unit, and the like.

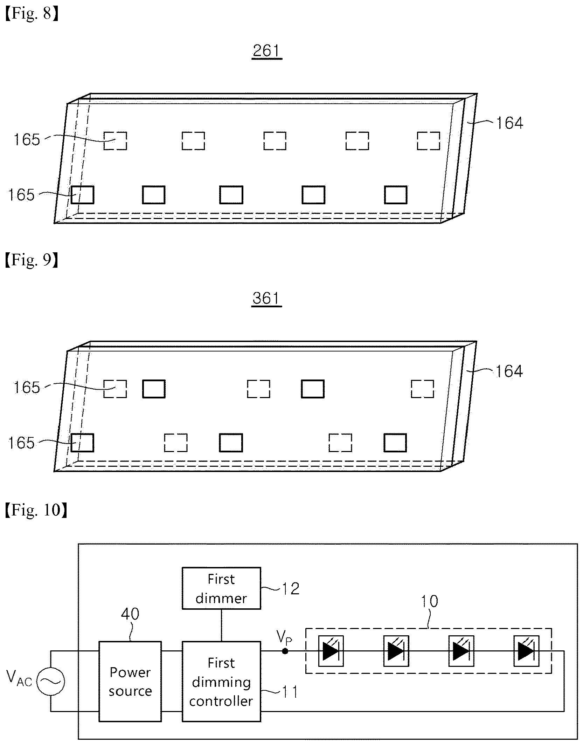

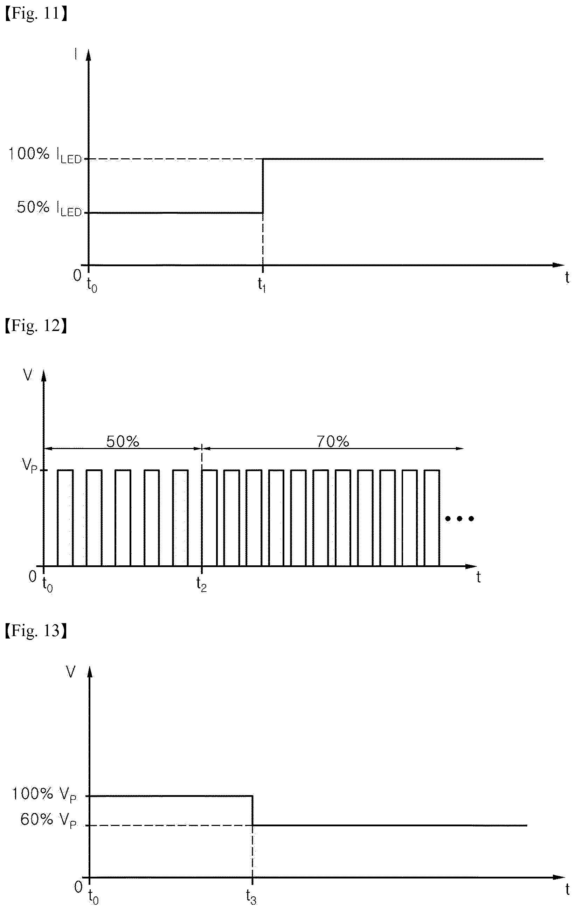

FIG. 10 is a block diagram illustrating an electrical connection relationship between components of the UV LED module according to the first exemplary embodiment. In addition, FIG. 11 to FIG. 13 are waveforms depicting a relationship between LED drive current or drive voltage and dimming level of the UV LED module according to the first exemplary embodiment. Hereinafter, referring to FIG. 10 to FIG. 13, a circuit design and features of the insect trap 4000 according to the first exemplary embodiment will be described.

First, as shown in FIG. 10, the insect trap 4000 according to the first exemplary embodiment may include a power source 40, a first light emission unit 10, a first dimming controller 11, and a first dimmer 12.

As shown in FIG. 10, the power source 40 is adapted to generate drive voltage Vp through rectification and stabilization of AC current (that is, input voltage Vac) supplied from an AC power source and to output the generated drive voltage Vp to the first light emission unit 10 and the first dimming controller 11. The power source 40 may include one of various power source circuits, such as a full-wave rectifier, a half-wave rectifier, SMPS, and the like. Herein, for convenience of description and understanding, the following description will be given with reference to an exemplary embodiment wherein the power source 40 is adapted to supply stabilized DC drive voltage Vp, that is, a DC drive type power source. However, it will be apparent to those skilled in the art that exemplary embodiments described herein are not limited to the DC drive type power source and may be applied to various types of insect traps including an AC drive type insect trap.

On the other hand, as described above, the first light emission unit 10 may include a plurality of LED chips or LED packages. Since the following description is given with reference to the exemplary embodiment wherein the insect trap is a direct drive type insect trap, the first light emission unit 10 has a single forward voltage level and is controlled as an integrated body. However, in an exemplary embodiment wherein the insect trap is an AC drive type insect trap, the first light emission unit 10 includes a plurality of LED groups, which may be sequentially turned on or off under control of the first dimming controller 11.

The first dimmer 12 is configured to receive a first dimming level for dimming control with respect to the first light emission unit 10. In addition, according to exemplary embodiments, the first dimmer 12 may be configured to act as an interface for programming a dimming level selection algorithm described below. Such a first dimmer 12 is not an essential component and may be optionally included in the insect trap 4000.

The first dimming controller 11 is configured to perform dimming control with respect to the first light emission unit 10 depending upon the first dimming level. The first dimming controller 11 may be configured to perform dimming control according to one of various dimming methods including, for example, an LED drive current control method, an LED drive voltage control method, a PWM control method, and a phase cut method. Herein, the first dimming level means a dimming level set with respect to the first light emission unit 10, a second dimming level means a dimming level set with respect to a second light emission unit 20, and a third dimming level means a dimming level set with respect to a third light emission unit 30.

FIG. 11 shows a waveform of an LED drive current I_{LED} in an exemplary embodiment wherein the first dimming controller 11 performs dimming control by controlling the LED drive current I_{LED} flowing through the first light emission unit 10. Such dimming control through control of the LED drive current is performed by allowing the first dimming controller 11 to control the LED drive current I_{LED} depending upon the first dimming level, based on the fact that light output from an LED chip is proportional to the LED drive current I_{LED}. For example, for dimming control at a dimming level of 80%, the LED drive current I_{LED} is controlled to 80% of an LED drive current I_{LED} at a dimming level of 100%. FIG. 11 shows a waveform of the LED drive current I_{LED}, in which the first dimming level is 50% and the LED drive current I_{LED} is controlled to 50% of the maximum LED drive current in a time zone tO-tl and, at a time point t1, the first dimming level is changed to 100% and the LED drive current I_{LED} is controlled to 100% of the maximum LED drive current. The current level of the LED drive current I_{LED} is changed depending upon the dimming level, causing change of light output from the first light emission unit 10 corresponding thereto.

FIG. 12 shows a waveform of drive voltage Vp in an exemplary embodiment wherein the first dimming controller 11 performs dimming control through PMW (pulse width modulation) control of drive voltage Vp applied to the first light emission unit 10 in response to a PWM (pulse width modulation) signal generated based on the first dimming level. Referring to FIG. 12, in a time zone t0-t2, the first dimming level is 50% and the duty ratio of the PWM signal is controlled to 50%, and at a time point t2, the first dimming level is changed to 70% and the duty ratio of the PWM signal is controlled to 70%. Since the duty ratio of the drive voltage Vp applied to the first light emission unit 10 is changed depending upon the dimming level, thereby causing change of light output from the first light emission unit 10 corresponding thereto.

FIG. 13 shows a waveform of drive voltage Vp in an exemplary embodiment wherein the first dimming controller 11 performs dimming control by controlling the voltage level of the drive voltage Vp applied to the first light emission unit 10. Such dimming control through control of the LED drive voltage is performed by allowing the first dimming controller 11 to control the voltage level of the drive voltage Vp applied to the first light emission unit 10 depending upon the first dimming level, based on the fact that light output from an LED chip is proportional to the drive voltage Vp. FIG. 13 shows a waveform of the drive voltage Vp, in which the first dimming level is 100% and the LED drive voltage Vp is controlled to 100% of the maximum LED drive voltage in a time zone t0-t3 and, at a time point t3, the first dimming level is changed to 60% and the LED drive voltage Vp is controlled to 60% of the maximum LED drive voltage. The voltage level of the LED drive voltage Vp is changed depending upon the dimming level, thereby causing change of light output from the first light emission unit 10 corresponding thereto.

Although the above description is focused on dimming control with respect to the first dimming controller 11 using one dimming method, it will be apparent to those skilled in the art that the first dimming controller 11 may perform dimming control using a plurality of dimming methods selected from among the above and other dimming methods well-known to those skilled in the art.

The first dimming controller 11 may perform dimming control while changing the dimming level for each time period. In one example, the first dimming controller 11 may be configured to randomly select a dimming level for every 10 seconds and control light emission of the first light emission unit 10 for 10 seconds depending upon the selected dimming level. In another example, the first dimming controller 11 may be configured to select a dimming level according to a preset dimming level selection algorithm for every 10 seconds and control light emission of the first light emission unit 10 for 10 seconds depending upon the selected dimming level. For example, the dimming level selection algorithm may be configured to increase the dimming level from 10% to 100% by 10% for every 10 seconds and to decrease the dimming level from 100% to 10% by 10% for every 10 seconds after the dimming level reaches 100%. Obviously, it is apparent to those skilled in the art that this dimming level selection algorithm is given by way of illustration only and various dimming level selection algorithms may be used.

In other exemplary embodiments, wherein the second light emission unit 20 has a different structure than the first light emission unit 10, the insect trap may further include a second dimming controller 21 to control operation of the second light emission unit 20. In one example, the second light emission unit 20 may be configured to emit light having a different wavelength than the first light emission unit 10. Specifically, the first light emission unit 10 may be configured to emit light having a first wavelength for attraction of a first kind of insect and the second light emission unit 20 may be configured to emit light having a second wavelength for attraction of a second kind of insect. In another example, the second light emission unit 20 may include LED chips or LED packages having a different structure than those of the first light emission unit 10. If the second light emission unit 20 has a different structure than the first light emission unit 10, the second light emission unit 20 may have different physical characteristics (for example, forward voltage level) than the first light emission unit 10 and the second light emission unit 20 may be controlled by the second dimming controller 21. Further, even in an exemplary embodiment wherein the second light emission unit 20 has the same structure as the first light emission unit 10, the second light emission unit 20 is configured to allow dimming control by the second dimming controller 21 in order to allow dimming control with respect to the first light emission unit 10 and the second light emission unit 20 to be performed independently of each other.

The second dimming controller 21 is configured to perform dimming control with respect to the second light emission unit 20 depending upon the second dimming level. Like the first dimming controller 11 described above, the second dimming controller 21 may be configured to perform dimming control according to one of various dimming methods including, for example, an LED drive current control method, an LED drive voltage control method, a PWM control method, and a phase cut method. In addition, the second dimmer 22 is configured to receive the second dimming level for performing dimming control with respect to the second light emission unit 20 and may be optionally provided to the insect trap 4000, like the first dimmer 12.

The third dimming controller 31 is configured to perform dimming control with respect to the third light emission unit 30 depending upon the third dimming level. Like the first dimming controller 11 and the second dimming controller 21 described above, the third dimming controller 31 may be configured to perform dimming control according to one of various dimming methods including, for example, an LED drive current control method, an LED drive voltage control method, a PWM control method, and a phase cut method. In addition, the third dimmer 32 is configured to receive the third dimming level for performing dimming control with respect to the third light emission unit 30 and may be optionally provided to the insect trap 4000, like the first dimmer 12 and the second dimmer 22.

Experimental Data 1 to 3 were obtained using an insect trap according to exemplary embodiments in order to confirm the effect of destroying mosquitoes by an insecticidal UV LED module.

### Experimental Data 1

Detailed conditions of the UV LED module are shown as follows and experimental results are shown in Table 1.
Intensity of illumination: 82.6 µW/cm² (at 30mm), 73.08 µW/cm² (at 70mm)
Insecticidal UV LED module: wavelength of 275 nm, four UV LED chips mounted thereon
Voltage: 16.025 V
Current: 0.24 A
Light irradiation distance: 70 mm

**Table 1**

| Record time | Elapsed time (second) | Energy (mJ) | Number of destroyed insects | Accumulated number of destroyed insects | Lethality |
|---|---|---|---|---|---|
| 10:01 | 0 | - | 0 | 0 | 0.0 |
| 10:15 | 900 | 65,772 | 3 | 3 | 25.0 |
| 10:34 | 1800 | 131,544 | 0 | 3 | 25.0 |
| 10:45 | 2700 | 197,316 | 0 | 3 | 25.0 |
| 11:01 | 3600 | 263,088 | 0 | 3 | 25.0 |
| 11:15 | 4500 | 328,860 | 2 | 5 | 41.7 |
| 11:30 | 5400 | 394,632 | 0 | 5 | 41.7 |
| 12:15 | 8100 | 591,948 | 0 | 5 | 41.7 |
| 13:00 | 10800 | 789,264 | 0 | 5 | 41.7 |
| 13:30 | 12600 | 920,808 | 0 | 5 | 41.7 |
| 14:00 | 14400 | 1,052,352 | 1 | 6 | 50.0 |
| 16:00 | 21600 | 1,578,528 | 2 | 8 | 66.7 |
| 18:30 | 30600 | 2,236,248 | 2 | 10 | 83.3 |
| 19:00 | 32400 | 2,367,792 | 0 | 10 | 83.3 |

As shown in Table 1, it can be confirmed that a mosquito lethality approaches 50% at an energy of 1 KJ or more.

### Experimental Data 2

Detailed conditions of the UV LED module are shown as follows and experimental results are shown in Table 2.
Intensity of illumination: 172.2 µW/cm² (at 30mm), 145.7 µW/cm² (at 70mm)
Insecticidal UV LED module: wavelength of 275 nm, four UV LED chips mounted thereon
Voltage: 16.025 V
Current: 0.24 A
Light irradiation distance: 70 mm

**Table 2**

| Record time | Elapsed time (second) | Energy (mJ) | Number of destroyed insects | Accumulated number of destroyed insects | Lethality |
|---|---|---|---|---|---|
| 18:12 | 0 | - | 10 | | 0.0 |
| 18:27 | 1500 | 131,130 | 2 | 2 | 6.7 |
| 19:00 | 4500 | 393,390 | 5 | 7 | 23.3 |
| 19:30 | 5100 | 655,650 | 4 | 11 | 36.7 |
| 20:00 | 8100 | 917,910 | 7 | 18 | 60.0 |
| 20:30 | 8700 | 1,180,170 | 3 | 21 | 70.0 |
| 21:00 | 11700 | 1,442,430 | 2 | 23 | 76.7 |

As shown in Table 2, it can be confirmed that a mosquito lethality approaches 50% at an energy of 1 KJ or more.

### Experimental Data 3

Detailed conditions of the UV LED module are shown as follows and experimental results are shown in Table 3.
Intensity of illumination: 172.2 µW/cm² (at 30mm), 145.7 µW/cm² (at 70mm)
Insecticidal UV LED module: wavelength of 275 nm, four UV LED chips mounted thereon
Voltage: 16.025 V
Current: 0.24 A
Light irradiation distance: 70 mm

**Table 3**

| Record time | Elapsed time (second) | Energy (mJ) | Number of destroyed insects | Accumulated number of destroyed insects | Lethality |
|---|---|---|---|---|---|
| 10:50 | 0 | - | 0 | 0 | 0.0 |
| 11:05 | 900 | 131,130 | 0 | 0 | 0.0 |
| 11:20 | 1800 | 393,390 | 0 | 0 | 0.0 |
| 11:35 | 2700 | 393,390 | 2 | 2 | 5.0 |
| 11:50 | 3600 | 524,520 | 7 | 9 | 22.5 |
| 12:05 | 4500 | 655,650 | 7 | 9 | 22.5 |
| 12:20 | 5400 | 786,780 | 7 | 16 | 40.0 |
| 12:35 | 6300 | 917,910 | 2 | 18 | 45.0 |
| 12:50 | 7200 | 1,049,040 | 2 | 20 | 50.0 |
| 13:05 | 10800 | 1,573,560 | 2 | 22 | 55.0 |
| 13:35 | 14400 | 2,098,080 | 1 | 23 | 57.5 |
| 13:50 | 18000 | 2,622,600 | 4 | 27 | 67.5 |
| 14:50 | 21600 | 3,147,120 | 1 | 28 | 70.0 |
| 15:50 | 25200 | 3,671,640 | 4 | 32 | 80.0 |
| 16:50 | 28800 | 4,196,160 | | 32 | 80.0 |

As shown in Table 3, it can be confirmed that a mosquito lethality approaches 50% at an energy of 1 KJ or more.

## Claims

1. An insect trap (1000) configured to entice and collect insects using UV light, comprising:
a main body (110);
an insect passage unit (120) detachably coupled to an upper side of the main body (110) and selectively allowing insects to pass therethrough;
an air collector (130) disposed at a lower side of the main body (110);
a motor (140) disposed between the air collector (130) and the insect passage unit (120);
a suction fan (150) disposed between the motor (140) and the air collector (130) and rotated by the motor (140);
a UV LED installation unit (160) disposed above the insect passage unit (120) and provided with a UV LED module (161);
a buttress (180) separating the UV LED installation unit (160) from the main body (110) while supporting the UV LED installation unit (160) above the main body (110) while so as to allow insects to be suctioned into a space between the main body (110) and the UV LED installation unit (160);
and
an insect collector (170) for collecting insects detachably coupled to a lower side of the air collector (130) and including a mesh (171) through which air is discharged from the insect trap (1000) by the suction fan (150);
wherein the insect passage unit (120) has a lattice shape including a plurality of insect passage holes (121) selectively allowing insects to pass therethrough, the plurality of insect passage holes (121) being formed by a circular member (122) and a radial member (123)
wherein the UV LED module (161) comprises at least one chip-on-board (COB) type UV LED chip (165) or at least one LED package mounted on a support substrate (164)
**characterised in that** the UV LED module (161) comprises the UV LED chips (165) mounted on both surfaces thereof to emit light in both directions of the UV LED module (161)
wherein the UV LED chips (165) or the UV LED packages mounted on one surface of the support substrate (164) are arranged so as not to overlap the UV LED chips (165) or the UV LED packages mounted on the other surface of the support substrate (164).

2. The insect trap (1000) according to claim 1, wherein the plurality of insect passage holes (121) are divided from one another by pluralities of circular members (122) and radial members (123) arranged around a center of the insect passage unit (120) and have an arc shape having a central angle of 20° to 40°, and each of the circular members (122) is separated a distance of 1.0 cm to 1.5 cm from another adjacent circular member (122).

3. The insect trap (1000) according to claim 1, wherein a ratio of vertical distance from the main body (110) to the UV LED installation unit (160) to height of the main body (110) ranges from 1:1 to 1:2; and/or
wherein a ratio of vertical distance from the insect collector (170) to the UV LED installation unit (160) to height of the insect collector (170) ranges from 1:0.5 to 1:2.

4. The insect trap (1000) according to claim 1, wherein the air collector (130) comprises an air collector rib (131), an air collector side opening (132), and an air exhaust port (133) such that insects suctioned by the suction fan (150) can be discharged to the insect collector (170), the air collector (130) having a conical shape, a diameter of which gradually decreases with increasing distance from the suction fan (150), a ratio of diameter of the air exhaust port (133) to diameter of the suction fan (150) ranging from 1:2 to 1:9.

5. The insect trap (1000) according to claim 1, wherein the mesh (171) member comprises mesh ribs (172) and mesh openings (173) formed between the mesh ribs (172) such that an air stream generated by the suction fan (150) is discharged from the insect collector (170) through the mesh openings (173), and a ratio of total area of the insect passage holes (121) to total area of the mesh openings (173) ranges from 1:1.2 to 1:3.0.

6. The insect trap (1000) according to claim 1, wherein the UV LED module (161) is mounted on the UV LED installation unit (160) such that light emitted from the UV LED module (161) travels in a horizontal direction with respect to the ground and
wherein the UV LED installation unit (160) comprises a transparent UV LED module cover having a shape corresponding to the UV LED module (161) and mounted on the UV LED installation unit (160) to protect the UV LED module (161).

7. The insect trap (1000) according to claim 1, further comprising:
a photocatalyst filter provided to a lower surface of the UV LED installation unit (160) and generating carbon dioxide using UV light emitted from the UV LED module (161) as a catalyst.

8. The insect trap (1000) according to claim 1, wherein the UV LED chip (165) or the UV LED package emits spot light and
the UV LED chip (165) or the UV LED package comprises a plurality of spot light sources, the spot light sources being separated a distance of 2 mm to 50 mm from each other.

9. The insect trap (1000) according to claim 1, wherein the UV LED module (161) comprises a first dimming controller (11) performing dimming control with respect to a first light emission unit (10) depending upon a first dimming level.

10. The insect trap (1000) according to claim 9, wherein the first dimming controller(11) controls a current level of LED drive current flowing through the first light emission unit (10) depending upon the first dimming level.

11. The insect trap (1000) according to claim 9, wherein the first dimming controller (11) controls a drive voltage applied to the first light emission unit (10) through pulse width modulation (PWM) control depending upon the first dimming level.

12. The insect trap (1000) according to claim 11, wherein the first dimming controller (11) controls a voltage level of a drive voltage applied to the first light emission unit (10) depending upon the first dimming level.

13. The insect trap (1000) according to claim 11, wherein the first dimming controller performs dimming control with respect to the first light emission unit (10) depending upon a changed dimming level while periodically changing the first dimming level according to a preset reference.

14. The insect trap (1000) according to claim 11, wherein the UV LED module (161) further comprises a second dimming controller (21) performing dimming control with respect to a second light emission unit (20) depending upon a second dimming level, and the power (40) source further supplies the drive voltage to the second light emission unit (20).

15. The insect trap (1000) according to claim 11, wherein the UV LED module (161) further comprises a third dimming controller (31) performing dimming control with respect to a third light emission unit (30) depending upon a third dimming level, and the power source (40) further supplies the drive voltage to the third light emission unit (30).

## Patentansprüche

1. Insektenfalle (1000), die dafür ausgelegt ist, unter Verwendung von UV-Licht Insekten anzulocken und aufzufangen, umfassend:
einen Hauptkörper (110);
eine insektendurchlassende Einheit (120), die lösbar an einer oberen Seite des Hauptkörpers (110) befestigt ist und es Insekten auf selektive Weise erlaubt, durch diese hindurch zu gelangen;
einen Luftsammler (130), der an einer unteren Seite des Hauptkörpers (110) angeordnet ist;
einen Motor (140), der zwischen dem Luftsammler (130) und der insektendurchlassenden Einheit (120) angeordnet ist einen Ansaugventilator (150), der zwischen dem Motor (140) und dem Luftsammler (130) angeordnet ist und von dem Motor (140) in eine Drehbewegung versetzt wird;
eine UV-LED-Anlageneinheit (160), die oberhalb der insektendurchlassenden Einheit (120) angeordnet ist und mit einem UV-LED-Modul (161) versehen ist;
eine Stütze (180), welche die UV-LED-Anlageneinheit (160) von dem Hauptkörper (110) trennt, wobei sie der UV-LED-Anlageneinheit (160) oberhalb des Hauptkörpers (110) derart als Stütze dient, dass Insekten in den Raum zwischen dem Hauptkörper (110) und der UV-LED-Anlageneinheit (160) gesaugt werden können;
und
einen Insektensammler (170) zum Sammeln von Insekten, der lösbar an einer unteren Seite des Luftsammler (130) befestigt ist und ein Maschenwerk (171) umfasst, durch das Luft mittels des Ansaugventilators (150) aus der Insektenfalle (1000) abgeführt wird;
wobei die insektendurchlassende Einheit (120) eine gitterartige Form aufweist, die eine Mehrzahl an insektendurchlassenden Löchern (121) aufweist, die es Insekten auf selektive Weise erlauben, durch diese hindurch zu gelangen, wobei die Mehrzahl an insektendurchlassenden Löchern (121) von einem kreisförmigen Element (122) und einem radialen Element (123) gebildet ist,
wobei das UV-LED-Modul (161) mindestens einen UV-LED-Chip (165) des Typs Chip-On-Board (COB) oder mindestens ein LED-Paket umfasst, das auf einem Trägersubstrat (164) angebracht ist,
**dadurch gekennzeichnet, dass**
das UV-LED-Modul (161) die UV-LED-Chips (165) derart umfasst, dass sie auf beiden Flächen desselben angebracht sind, um Licht in beide Richtungen des UV-LED-Moduls (161) auszusenden, wobei die UV-LED-Chips (165) oder die UV-LED-Pakete, die auf einer Fläche des Trägersubstrats (164) angebracht sind, derart angeordnet sind, dass sie nicht mit den UV-LED-Chips (165) oder den UV-LED-Paketen überlappen, die auf der anderen Fläche des Trägersubstrats (164) angeordnet sind.

2. Insektenfalle (1000) nach Anspruch 1, wobei die Mehrzahl an insektendurchlassenden Löchern (121) durch Mehrzahlen an kreisförmigen Elementen (122) und radialen Elementen (123) voneinander getrennt sind, wobei diese rundum einen Mittelpunkt der insektendurchlassenden Einheit (120) angeordnet sind und eine Bogenform mit einem Mittelpunktswinkel von 20° bis 40° aufweisen und wobei jedes der kreisförmigen Elemente (122) vom angrenzenden kreisförmigen Element (122) durch eine Beabstandung von 1,0 cm bis 1,5 cm getrennt ist.

3. Insektenfalle (1000) nach Anspruch 1, wobei das Verhältnis des vertikalen Abstands zwischen dem Hauptkörper (110) und der UV-LED-Anlageneinheit (160) zur Höhe des Hauptkörpers (110) im Bereich von 1:1 bis 1:2 liegt; und/oder wobei das Verhältnis des vertikalen Abstands zwischen dem Insektensammler (170) und der UV-LED-Anlageneinheit (160) zur Höhe des Insektensammlers (170) im Bereich von 1:0,5 und 1:2 liegt.

4. Insektenfalle (1000) nach Anspruch 1, wobei der Luftsammler (130) einen Luftsammlersteg (131), eine seitliche Luftsammleröffnung (132) und eine Luftaustrittsstelle (133) umfasst, so dass Insekten, die vom Ansaugventilator (150) angesaugt werden, an den Insektensammler (170) abgegeben werden können, wobei der Luftsammler (130) eine kegelförmige Gestalt aufweist, deren Durchmesser mit zunehmender Entfernung von Ansaugventilator (150) abnimmt, wobei das Verhältnis des Durchmessers der Luftaustrittstelle (133) zum Durchmesser des Ansaugventilators (150) im Bereich von 1:2 bis 1:9 liegt.

5. Insektenfalle (1000) nach Anspruch 1, wobei das Maschenwerk(171)-Element Maschenwerkstege (172) und Maschenwerköffnungen (173) umfasst, die derart zwischen den Maschenwerkstegen (172) ausgebildet sind, dass ein Luftstrom, wie er von dem Ansaugventilator (150) erzeugt wird, aus dem Insektensammler (170) durch die Maschenwerköffnungen (173) abgeführt wird, wobei das Verhältnis der Gesamtfläche der insektendurchlassenden Löcher (121) zur Gesamtfläche der Maschenwerköffnungen (173) im Bereich von 1:1,2 bis 1:3,0 liegt.

6. Insektenfalle (1000) nach Anspruch 1, wobei das UV-LED-Modul (161) derart auf der UV-LED-Anlageneinheit (160) angebracht ist, dass das Licht, das vom UV-LED-Modul (161) ausgesendet wird, sich unter Bezugnahme auf den Boden in horizontaler Richtung ausbreitet, und
wobei die UV-LED-Anlageneinheit (160) eine transparente UV-LED-Modulabdeckung umfasst, wobei deren Gestalt dem UV-LED-Modul (161) entspricht und sie an der UV-LED-Anlageneinheit (160) angebracht ist, um das UV-LED-Modul (161) zu schützen.

7. Insektenfalle (1000) nach Anspruch 1, ferner umfassend:
einen photokatalytischen Filter, mit dem eine untere Fläche der UV-LED-Installationseinheit (160) versehen wird und der als Katalysator unter Einwirkung von UV-Licht, wie es von dem UV-LED-Modul (161) ausgesendet wird, Kohlendioxid erzeugt.

8. Insektenfalle (1000) nach Anspruch 1, wobei der UV-LED-Chip (165) oder das UV-LED-Paket gebündeltes Licht aussenden und der UV-LED-Chip (165) oder das UV-LED-Paket mehrere Quellen gebündelten Lichts umfasst, wobei die Quellen gebündelten Lichts durch eine Beabstandung von 2 mm bis 50 mm voneinander getrennt sind.

9. Insektenfalle (1000) nach Anspruch 1, wobei das UV-LED-Modul (161) ein erstes Dimmungssteuerorgan (11) umfasst, das hinsichtlich einer ersten lichtaussendenden Einheit (10) die Dimmungssteuerung in Abhängigkeit von einem ersten Dimmungsniveau durchführt.

10. Insektenfalle (1000) nach Anspruch 9, wobei das erste Dimmungssteuerorgan (11) ein aktuelles Niveau an LED-Betriebsstrom, der durch die erste lichtaussendende Einheit (10) fließt, in Abhängigkeit von dem ersten Dimmungsniveau steuert.

11. Insektenfalle (1000) nach Anspruch 9, wobei das erste Dimmungssteuerorgan (11) eine Betriebsspannung, die an die erste lichtaussendende Einheit (10) angelegt wird, mittels Steuerung durch Pulsdauermodulation (PDM) in Abhängigkeit von dem ersten Dimmungsniveau steuert.

12. Insektenfalle (1000) nach Anspruch 11, wobei das erste Dimmungssteuerorgan (11) ein Spannungsniveau einer Betriebsspannung, die an die erste lichtaussendende Einheit (10) angelegt wird, in Abhängigkeit von dem ersten Dimmungsniveau steuert.

13. Insektenfalle (1000) nach Anspruch 11, wobei das erste Dimmungssteuerorgan hinsichtlich der ersten lichtaussendenden Einheit (10) die Dimmungssteuerung in Abhängigkeit von einem geänderten Dimmungsniveau durchführt, wobei das erste Dimmungsniveau periodisch entsprechend einem vorbestimmten Sollwert geändert wird.

14. Insektenfalle (1000) nach Anspruch 11, wobei das UV-LED-Modul (161) ferner ein zweites Dimmungssteuerorgan (21) umfasst, das hinsichtlich einer zweiten lichtaussendenden Einheit (20) die Dimmungssteuerung in Abhängigkeit von einem zweiten Dimmungsniveau durchführt, wobei die Energiequelle (40) ferner die zweite lichtaussendende Einheit (20) mit der Betriebsspannung versorgt.

15. Insektenfalle (1000) nach Anspruch 11, wobei das UV-LED-Modul (161) ferner ein drittes Dimmungssteuerorgan (31) umfasst, das hinsichtlich einer dritten lichtaussendenden Einheit (30) die Dimmungssteuerung in Abhängigkeit von einem dritten Dimmungsniveau durchführt, wobei die Energiequelle (40) ferner die dritte lichtaussendende Einheit (30) mit der Betriebsspannung versorgt.

## Revendications

1. Piège à insectes (1000) conçu pour attirer et recueillir des insectes par lumière UV, comprenant :
un corps principal (110) ;
une unité de passage d'insecte (120) couplée de manière détachable à un côté supérieur du corps principal (110) et permettant aux insectes de la traverser de manière sélective ;
un collecteur d'air (130) disposé sur un côté inférieur du corps principal (110) ;
un moteur (140) disposé entre le collecteur d'air (130) et l'unité de passage d'insecte (120) ;
un ventilateur aspirant (150) disposé entre le moteur (140) et le collecteur d'air (130) et mis en rotation par le moteur (140) ;
une unité d'installation de DEL UV (160) disposée au-dessus de l'unité de passage d'insecte (120) et pourvue d'un module de DEL UV (161) ;
un contrefort (180) séparant l'unité d'installation de DEL UV (160) du corps principal (110) tout en supportant l'unité d'installation de DEL UV (160) au-dessus du corps principal (110) de manière à permettre aux insectes d'être aspirés dans un espace situé entre le corps principal (110) et l'unité d'installation de DEL UV (160) ;
et
un collecteur d'insecte (170) destiné à recueillir des insectes, couplé de manière détachable à un côté inférieur du collecteur d'air (130) et comportant un maillage (171) à travers lequel de l'air est évacué du piège à insectes (1000) par le ventilateur aspirant (150) ;
dans lequel l'unité de passage d'insecte (120) présente une forme de treillis comportant une pluralité de trous de passage d'insecte (121) permettant aux insectes de les traverser de manière sélective, la pluralité de trous de passage d'insecte (121) étant formés par un élément circulaire (122) et un élément radial (123)
dans lequel le module de DEL UV (161) comprend au moins une puce DEL UV (165) de type à montage direct sur carte (« chip on board », COB) ou au moins un boîtier de DEL monté sur un substrat de support (164)
**caractérisé en ce que**
le module de DEL UV (161) comprend les puces DEL UV (165) montées sur les deux surfaces de celui-ci pour émettre de la lumière dans les deux directions du module de DEL UV (161) dans lequel les puces DEL UV (165) ou les boîtiers de DEL UV montés sur une surface du substrat de support (164) sont agencés de façon à ne pas chevaucher les puces DEL UV (165) ou les boîtiers de DEL UV montés sur l'autre surface du substrat de support (164).

2. Piège à insectes (1000) selon la revendication 1, dans lequel la pluralité de trous de passage d'insecte (121) sont séparés les uns des autres par des pluralités d'éléments circulaires (122) et d'éléments radiaux (123) agencés autour d'un centre de l'unité de passage d'insecte (120) et présentent une forme d'arc ayant un angle central de 20° à 40°, et chacun des éléments circulaires (122) est séparé d'un autre élément circulaire (122) adjacent par une distance de 1,0 cm à 1,5 cm.

3. Piège à insectes (1000) selon la revendication 1, dans lequel un rapport de la distance verticale à partir du corps principal (110) jusqu'à l'unité d'installation de DEL UV (160) à la hauteur du corps principal (110) varie de 1:1 à 1:2 ; et/ou
dans lequel un rapport de la distance verticale à partir du collecteur d'insecte (170) jusqu'à l'unité d'installation de DEL UV (160) à la hauteur du collecteur d'insecte (170) varie de 1:0,5 à 1:2.

4. Piège à insectes (1000) selon la revendication 1, dans lequel le collecteur d'air (130) comprend une nervure de collecteur d'air (131), une ouverture latérale de collecteur d'air (132), et un orifice de sortie d'air (133) de telle sorte que des insectes aspirés par le ventilateur aspirant (150) peuvent être évacués dans le collecteur d'insectes (170), le collecteur d'air (130) présentant une forme conique, dont le diamètre diminue progressivement au fur et à mesure que la distance par rapport au ventilateur aspirant (150) augmente, un rapport du diamètre de l'orifice de sortie d'air (133) au diamètre du ventilateur aspirant (150) variant de 1:2 à 1:9.

5. Piège à insectes (1000) selon la revendication 1, dans lequel l'élément de maillage (171) comprend des nervures de maillage (172) et des ouvertures de maillage (173) formées entre les nervures de maillage (172) de telle sorte qu'un flux d'air généré par le ventilateur aspirant (150) est évacué du collecteur d'insectes (170) à travers les ouvertures de maillage (173), et un rapport de la surface totale des trous de passage d'insecte (121) à la surface totale des ouvertures de maillage (173) varie de 1:1,2 à 1:3,0.

6. Piège à insectes (1000) selon la revendication 1, dans lequel le module de DEL UV (161) est monté sur l'unité d'installation de DEL UV (160) de telle sorte que la lumière émise par le module de DEL UV (161) se propage dans une direction horizontale par rapport au sol et
dans lequel l'unité d'installation de DEL UV (160) comprend un élément de recouvrement de module de DEL UV transparent présentant une forme correspondant au module de DEL UV (161) et monté sur l'unité d'installation de DEL UV (160) pour protéger le module de DEL UV (161).

7. Piège à insectes (1) selon la revendication 1, comprenant en outre :
un filtre photocatalytique prévu sur une surface inférieure de l'unité d'installation de DEL UV (160) et générant du dioxyde de carbone au moyen de la lumière UV émise par le module de DEL UV (161) comme catalyseur.

8. Piège à insectes (1000) selon la revendication 1, dans lequel la puce DEL UV (165) ou le boîtier de DEL UV émet une lumière directionnelle et
la puce DEL UV (165) ou le boîtier de DEL UV comprend une pluralité de sources de lumière directionnelle, les sources de lumière directionnelle étant séparées les unes des autres par une distance de 2 mm à 50 mm.

9. Piège à insectes (1000) selon la revendication 1, dans lequel le module de DEL UV (161) comprend un premier dispositif de commande de gradation (11) réalisant une commande de gradation par rapport à une première unité d'émission de lumière (10) en fonction d'un premier niveau de gradation.

10. Piège à insectes (1000) selon la revendication 9, dans lequel le premier dispositif de commande de gradation (11) commande un niveau de courant de courant de pilotage de DEL circulant à travers la première unité d'émission de lumière (10) en fonction du premier niveau de gradation.

11. Piège à insectes (1000) selon la revendication 9, dans lequel le premier dispositif de commande de gradation (11) commande une tension de pilotage appliquée à la première unité d'émission de lumière (10) par commande à modulation de largeur d'impulsions (MLI) en fonction du premier niveau de gradation.

12. Piège à insectes (1000) selon la revendication 11, dans lequel le premier dispositif de commande de gradation (11) commande un niveau de tension d'une tension de pilotage appliquée à la première unité d'émission de lumière (10) en fonction du premier niveau de gradation.

13. Piège à insectes (1000) selon la revendication 11, dans lequel le premier dispositif de commande de gradation réalise une commande de gradation par rapport à la première unité d'émission de lumière (10) en fonction d'un niveau de gradation modifié tout en modifiant périodiquement le premier niveau de gradation en fonction d'une référence préréglée.

14. Piège à insectes (1000) selon la revendication 11, dans lequel le module de DEL UV (161) comprend en outre un deuxième dispositif de commande de gradation (21) réalisant une commande de gradation par rapport à une deuxième unité d'émission de lumière (20) en fonction d'un deuxième niveau de gradation, et la source d'énergie (40) fournit en outre la tension de pilotage à la deuxième unité d'émission de lumière (20) .

15. Piège à insectes (1000) selon la revendication 11, dans lequel le module de DEL UV (161) comprend en outre un troisième dispositif de commande de gradation (31) réalisant une commande de gradation par rapport à une troisième unité d'émission de lumière (30) en fonction d'un troisième niveau de gradation, et la source d'énergie (40) fournit en outre la tension de pilotage à la troisième unité d'émission de lumière (30) .
